# EUROPEAN PATENT SPECIFICATION

(11) **EP 2 961 559 B1**
(45) Date of publication and mention of the grant of the patent: **20.05.2020**
(21) Application number: 14757006.3
(22) Date of filing: 28.02.2014
(51) Int. Cl.: B23K 26/40, B23K 26/364, B23K 26/0622, B23K 26/382, B23K 103/00, B23K 26/38

(54) **LASER SYSTEMS AND METHOD FOR PROCESSING SAPPHIRE**
LASERSYSTEME UND -VERFAHREN ZUR SAPHIRBEARBEITUNG
SYSTÈMES LASER ET PROCÉDÉ POUR LE TRAITEMENT DU SAPHIR

(30) Priority: 28.02.2013 US 201361770816 P
(43) Date of publication of application: 06.01.2016
(73) Proprietor: IPG Photonics Corporation, Oxford, Massachusetts 01540 (US)
(72) Inventor: KANCHARLA, Vijay, Shrewsbury, Massachusetts 01545 (US); SHINER, William, Millbury, Massachusetts 01527 (US); MAYNARD, Steven, Dudley, Massachusetts 01571 (US); SERCEL, Jeffrey P., Hollis, New Hampshire 03049 (US); MENDES, Marco, Manchester, New Hampshire 03104 (US); SARRAFI, Rouzbeh, Fremont, New Hampshire 03044 (US)
(74) Representative: Kobiako von Gamm, Iouri
(86) International application number: PCT/US2014/019460
(87) International publication number: WO 2014/134470

(56) References cited:
- JP-A- S56 169 347
- US-A1- 2007 228 100
- US-A1- 2007 228 100
- US-A1- 2007 272 668
- US-A1- 2007 272 668
- US-A1- 2012 255 935
- US-A1- 2012 255 935
- 'QCW FIBER LASER 2012 SERIES.' DATASHEET January 2012, XP055293598 Retrieved from the Internet: <URL:https://web.archive.org/web/2012031423 2840/http://www.ipgphotonics.com/Collateral /Documents/English-US/QuasiCW_SMJPG.pdf> [retrieved on 2014-05-20]

## Description

### BACKGROUND OF THE DISCLOSURE

### Field of the Disclosure

The present disclosure relates to processing sapphire using lasers in a wavelength range of about 1060-1070 nm, as shown in the preamble of claims 1, 9 and 12 (see, for example US 2012/255935 A1).

### Background Art Discussion

Hard materials such as sapphire (Al₂O₃) are used for many industrial applications such as optical windows, hard materials preventing abrasion, and buffer materials for semiconductor emitting device, and the like. Conventional mechanical methods for treating or processing sapphire substrates include diamond scribing and blade dicing. When using these methods, the low depth of the scribe can lead to breaking the substrate, which lowers production yields, for example, when manufacturing of LEDs. Other problems associated with blade dicing include formation of debris (which may require post-cutting cleaning), stress induced into the substrate, and the relatively large width of the cut known as kerf.

Laser processing methods have been used in an effort to increase efficiency because they provide a noncontact process that is more efficient for high volume production. The laser scribed cutting depth may also be controlled to reduce stress on the wafer during the break process. Also, laser scribing facilitates precise positioning of scribes within a few microns of active features along with a narrow scribe width with fewer chippings. Thus, laser processing has overall advantages of increased throughput, low cost, ease of use, and high yields compared to traditional mechanical methods.

Certain materials, however, present challenges when processing using lasers. The bandgap of sapphire, for example, is approximately 8eV, and under normal low intensity illumination, sapphire is optically transparent from 5000 nm to about 300 nm. Therefore, conventional laser processing of sapphire has used lasers that are more likely to be absorbed in sapphire, such as DUV and UV lasers operating in a wavelength range between about 157 and about 355 nm.

One technique for laser processing of sapphire involves ablation, which is a vaporization of the material resulting from a combination of bulk heating of the material and avalanche ionization. Ultrafast lasers (e.g., picosecond and shorter pulse widths) and/or Q-switched pulse lasers with nanosecond pulse widths may be used to emit pulses with high peak power capable of ablating sapphire. The high intensity drives a nonlinear, multiphoton absorption process which excites electrons in the material and directly breaks bonds. However, high peak power may thermally damage the cut edge because the heat from the absorption of the laser beam has time to diffuse into the substrate.

Another laser processing technique involves scribing and breaking along internal modification regions inside the sapphire. The output of a picoseconds laser, for example, may be focused inside the sapphire substrate creating cracks within the substrate without affecting the top and bottom surfaces. Once these cracks are produced, the individual pieces may be broken out from the substrate using mechanical means such as tape expansion. This two-step process, however, may be time consuming and cost inefficient.

A further technique for laser processing materials with a low absorption coefficient includes water jet laser processing. Water jet laser processing involves focusing a laser beam into a hair-thin, low-pressure water jet, which then guides the laser beam onto the wafer. Water jet laser processing systems, such as the Laser-Microjet® system, may prevent heat damage and contamination but also involves a more complex and expensive system. A Q-switched Nd:YAG laser operating at 1064 nm and frequency-doubled Nd:YAG lasers operating at 532 nm are particularly adapted to the water jet-guided cutting technology.

The existing techniques used for laser processing of sapphire discussed above suffer from some of the same drawbacks. In particular, the cost of pulsed lasers is high. Also, the wavelengths used in UV cutting require the use of crystals, which may have a short useful life and may present issues with the maintenance of these lasers. Although excimer lasers may be used, these lasers generally have large dimensions and low efficiency.

Accordingly, a need exists for a system and method of laser cutting sapphire substrates at wavelengths of around 1060-1070 nm with reduced cutting edge defects and increased speeds in a time-effective and a cost-effective manner.

### SUMMARY OF THE DISCLOSURE

Consistent with an embodiment, method is provided for laser processing a sapphire substrate. The method includes: periodically switching on a power source to pulse a continuous wave laser and emitting consecutive pulses of laser light, respectively, using single mode (SM) light from a single mode (SM) fiber laser, thereby operating the single mode (SM) fiber laser in a quasi-continuous wave ("QCW") mode so as to emit consecutive pulses of single mode (SM) laser light at a wavelength ranging between about 1060 nm and about 1070 nm; focusing the pulses of laser light at the sapphire substrate; and laser processing and treating, respectively, the sapphire substrate with the pulses of laser light, wherein the pulses of single mode (SM) light each having a pulse width ranging between about 50 microseconds and about 600 microseconds, wherein the laser is operated with a duty cycle ranging between about 1% and about 10% and wherein the laser processes the sapphire substrate with the pulses of laser light so as to penetrate through it.

Consistent with another embodiment, laser processing system is provided for laser processing sapphire substrates. The laser processing system includes a fiber laser configured to operate in a quasi continuous wave ("QCW") mode and wherein the fiber laser includes a single mode (SM) fiber laser to emit consecutive pulses of single mode (SM) laser light at a wavelength between about 1060 nm and about 1070 nm and a controller coupled to the fiber laser for periodically switching power to the SM fiber laser to pulse the fiber laser in the QCW mode with a duty cycle ranging between about 1 % and about 10%. The controller is configured to periodically switch power to the SM fiber laser to emit pulses each having a pulse width which ranges between about 50 microseconds and about 600 microseconds. The laser processing system also includes a focus lens configured to focus the laser light on the sapphire substrate so as to process the sapphire substrate, a laser head configured to direct the focused laser light to the sapphire substrate and including a nozzle for delivering an inert gas to the sapphire substrate with the laser light, and a gas delivery system configured to deliver the inert gas into the laser head.

Consistent with a further embodiment, a multiple-beam laser processing system is provided for processing a sapphire substrate. The multiple-beam laser processing system includes: an assist laser for generating an assist laser beam with a wavelength and a pulse duration such that the sapphire substrate is sufficiently absorptive of the assist laser beam to modify a property of the sapphire substrate; a single mode (SM) quasi continuous wave (QCW) fiber laser for generating a process laser beam with a wavelength between about 1060 nm and about 1070 nm, wherein the wavelength of the assist laser beam is less than the wavelength of the single mode process laser beam; and a beam combiner for directing the assist laser beam and the single mode (SM) process laser beam at a target location on the workpiece such that the assist laser beam modifies a property of the sapphire substrate at the target location forming absorption centers and such that the single mode (SM) process laser beam is coupled into the absorption centers formed in the sapphire substrate at the target location to complete processing of the sapphire substrate at the target location.

### BRIEF DESCRIPTION OF THE DRAWINGS

These and other features and advantages will be better understood by reading the following detailed description, taken together with the drawings wherein:
FIG. 1 is a schematic diagram of a laser processing system for cutting a sapphire material using a quasi-continuous wave (QCW) laser system, consistent with an embodiment of the present disclosure.
FIGS. 2A and 2B are images illustrating a sapphire substrate with a scribe line formed using a QCW laser system, consistent with an embodiment of the present disclosure.
FIG. 3 is a schematic diagram of a multiple-beam laser processing system, consistent with another embodiment of the present disclosure.

### DETAILED DESCRIPTION

Laser processing of sapphire, consistent with embodiments of the present disclosure, is performed using a continuous wave laser operating in a quasi-continuous wave (QCW) mode to emit consecutive laser light pulses in a wavelength range of about 1060 nm to 1070 nm (hereinafter "QCW laser"). Laser processing of sapphire using a QCW laser is performed with a lower duty cycle between 1% and 10% and in an inert gas atmosphere such as argon or helium. Laser processing of sapphire using a QCW laser further includes the use of an assist laser having a shorter wavelength and/or pulse duration to modify a property of the sapphire to form absorption centers, which facilitate coupling of the laser light pulses of the QCW laser into the sapphire.

Laser processing using the QCW laser, consistent with embodiments described herein, may include drilling, cutting and/or scribing the sapphire substrate. Sapphire is a crystalline form of alumina (Al₂O₃), which is transparent to light wavelengths between about 170 nm and 5300 nm, five (5) times stronger than glass, and nine (9) on the Mohs scale of hardness. Sapphire is also a good electrical insulator and has a high thermal conductivity. Sapphire may be particularly advantageous in manufacturing of blue and green light emitting diodes ("LED"). Sapphire also has potential for replacing the existing glass covering the screen for a mobile device including, but not limited to, telephones, cameras, computers and the like. Thus, the laser processing systems and methods described herein may be used to cut sapphire substrates to a desired shape for use in manufacturing photonic devices, screens and other products incorporating sapphire.

As used herein, "absorption center" refers to a location in a non-absorptive material where the properties of the material have been modified (e.g., craters, roughening, optical damage, internal material defects, color centers, bulk material property changes, or increased temperature) such that light is more likely to be absorbed as compared to an unmodified region of the material. As used herein, "wavelength" refers to an approximate emission wavelength of a laser and may encompass a band or range of wavelengths around the stated wavelength. As used herein, "ultraviolet (UV) spectral range" refers to a spectral range of 10 nm to 380 nm, "visible spectral range" refers to a spectral range of 380 nm to 700 nm, and "infra-red spectral range" refers to a spectral range of 700 nm to 10.6 µm.

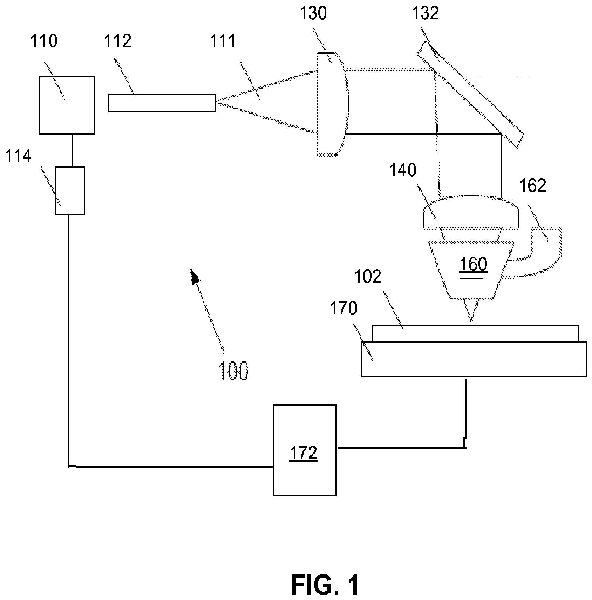

Referring to FIG. 1, an embodiment of a laser processing system 100 is described for processing a workpiece 102, such as a sapphire substrate, using a focused laser beam. The workpiece 102 may also be made from other large bandgap and/or transparent materials including, without limitation, aluminum diamond, gallium nitride, silicon carbide, zinc selenide, silicon, silicon nitride, aluminum nitride, gallium nitride on sapphire, and glass (e.g., fused quartz or silica). Although the example embodiments described herein mostly relate to laser treatment or processing of sapphire, at least some of these other large bandgap materials can be successfully treated with the disclosed laser processing systems.

In the illustrated embodiment, the laser processing system 100 includes a QCW single mode (SM) fiber laser 110 emitting a single mode, divergence limited laser beam 111 from the downstream end of a processing passive fiber 112. The QCW fiber laser 110 may range in power from 500 W to 50 kW and may have a monolithic, entirely solid state, fiber-to-fiber design that does not require mirrors or optics to align or adjust. The QCW fiber laser 10 may also be modular, built from multiple laser units, each one generating hundreds of watts of output power. This also allows the laser system to incorporate reserve modules and power margins. The QCW SM fiber laser may include, for example, a QCW SM ytterbium fiber laser with an emission wavelength of about 1070 nm, such as the QCW series available from IPG Photonics Corporation. In other embodiments, the laser may include a fiber disc laser or a rod laser such as a Nd: YAO laser. Multi-mode lasers may also be used.

The laser processing system 100 also includes a collimator 130 to collimate the beam 111 and a beam bender or reflector 132 to direct the beam 111 to a focus lens 140. The focus lens 140 may focus the beam 111 to a relatively small spot size, for example, in a range of about 14-30 µm. Alternatively or additionally, other optics may also be used for modifying and/or directing the laser light to the desired location. Such optics may include, without limitation, beam expanders, beam collimators, beam shaping lenses, reflectors, masks, beamsplitters and scanners (e.g., a galvanometer).

The laser processing system 100 further includes a laser head including a nozzle 160 coupled to a gas delivery system 162. The gas delivery system 162 may provide a stream of inert gas, such as nitrogen, argon or helium, to the nozzle 160 close to the work area when processing the workpiece 102. The gas may be delivered with a pressure in a range of about 6.89469 bar to 20.68406 bar (100 to 300 psi). The presence of the inert atmosphere improves the efficiency of the laser processing.

The laser processing system 100 further includes a translation stage 170 configured to impart a translational motion to the workpiece 102 in one or more axes or dimensions, thereby allowing the workpiece 102 to move relative to the focused laser beam. The translation stage 170 may be operated manually or may receive commands from a controller 172. Alternatively, the laser 110 may be moved and displaced relative to the workpiece 102 to be processed. The controller 172 includes processing circuitry, such as a central processing unit ("CPU"), to communicate with translation stage 170.

The QWC SM fiber laser 110 includes a pump source 114 operable to be switched on for time intervals having a duration long enough to operate the laser as close to its steady state as possible, i.e. the laser is optically in the state of continuous-wave operation, also referred to as a quasi-continuous wave (QCW) mode. The controller 172 may be used to control the pump source 114. The percentage of time the laser is switched on, i.e., the duty cycle, is selected to reduce the heating and heat related problems. The controller 172 may control the pump source 114 to have a duty cycle in a range of about 1 % to 10%. Therefore, the QCW SM fiber laser 110 operating in the QCW mode may have higher output peak powers and lower average powers.

In one example, a sapphire substrate with a thickness of 0.7 mm was processed using the following process and laser parameters: a Ytterbium (Yb) single mode laser; 1070 nm wavelength; 14 µm fiber core diameter; 60 mm collimating distance; 123 mm focal length; 28.7 µm spot size; 900 W peak power; 87.5 µs pulse duration; 400 Hz pulse frequency; 78.7 mJ pulse energy; argon or nitrogen assist gas at 17.23671 bar (250 psi); 0.5 mm nozzle stand off; 1.5 mm nozzle orifice; and 8.46 mm/s cutting speed.

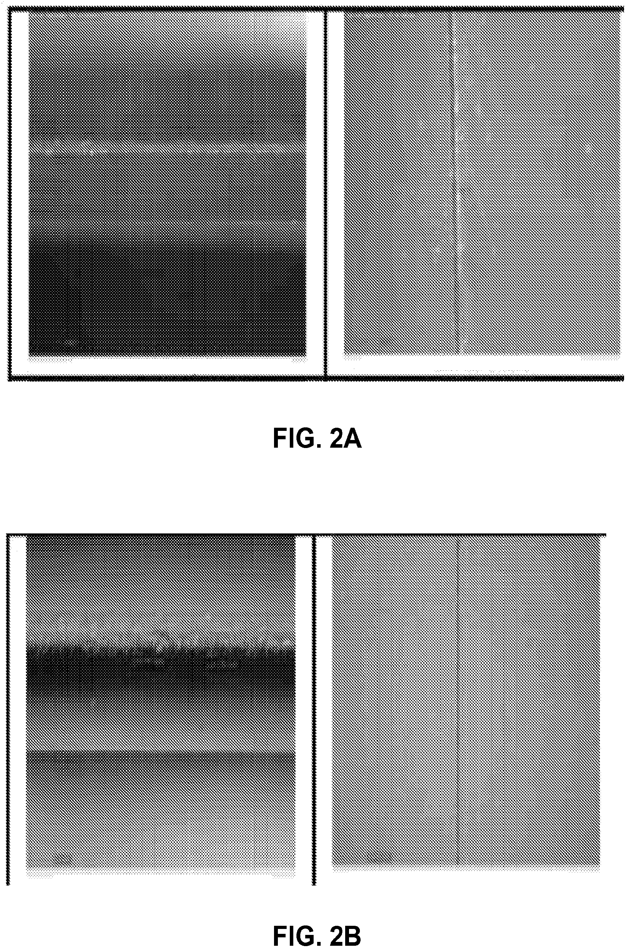

FIGS. 2A and 2B illustrates the results obtained using the laser processing system 100 of FIG. 1 for processing or treating the sapphire substrate with the parameters indicated above. As shown, the edges are clean and there are no visible cracks. Equally satisfactory results were obtained for unpolished and polished samples.

In another example, sample sapphire substrates of different thicknesses (e.g., 0.015 in. and 0.040 in.) were processed with different processing operations (e.g., scribing, cutting, and drilling) using a Yb-doped QCW SM fiber laser at different duty cycles, pulse frequencies and speeds. The following Table I illustrates the parameters used for these processing operations.

**Table I**

| Sapphire cm (inches) | Process | Power (W) | Frequency (Hz) | Duty Cycle(%) | Speed (cm per minute ("cm/min") (inches per minute ("ipm")) | Assist gas |
|---|---|---|---|---|---|---|
| 0.0381 (0.015") | Scribing | 285 | 3500 | 20 | 1066.8 (420) | 2068.41 mbar (30 psi) N₂ |
| 0.0381 (0.015") | Cutting | 285 | 2000 | 40 | 101.6 (40) | 2068.41 mbar (30 psi) N₂ |
| 0.0381 (0.015") | Drilling | 285 | 2000 | 40 | <25.4 (<10) | 2068.41 mbar (30 psi) N₂ |
| 0.1060 (0.040") | Scribing | 285 | 2500 | 25 | 914.4 (360) | 2068.41 mbar (30 psi) N₂ |
| 0.1060 (0.040") | Scribing | 285 | 500 | 30 | 76.2 (30) | 2068.41 mbar (30 psi) N₂ |
| 0.1060 (0.040") | Drilling | 285 | 2000 | 30 | <25.4 (<10) | 2068.41 mbar (30 psi) N₂ |

In this example, scribing of the 0.0381 cm (0.015")-thick sapphire sample with a laser beam at 285 W removed about 30% of the thickness of the sample at a speed of about 1066.8 cm/min (420 ipm). Cutting the 0.0381 cm (0.015")-thick sapphire sample was also effective at a 285 W power and speed of about 101.6 cm/min (40 ipm). Drilling circular holes in the sapphire samples was successful at relatively low speeds. The same processing operations were also successfully performed on the 0.1016 cm (0.040") thick wafer.

QCW SM fiber laser at a wavelength in the range of about 1060 - 1070 nm. The single mode beam with a relatively small spot provides a high power density capable of breaking down the material. Better processing appears to be possible at lower duty cycles, i.e., low average powers. The peak power and average power may need to be higher as the material thickness increases, but the low duty cycle appears to be more of a key factor than peak power.

In a further example, a high-quality cut may be achieved at 900 W, 500 Hz and 3% duty cycle (i.e., average power of 27 W) with a speed of 50.8 cm/min (20 inches/min). In this example, the cutting speed may be doubled to 101.6 cm/min (40 inch/min) by increasing the pulse frequency to 1000 Hz. The quality of the cut may deteriorate in response to scaling up the laser power. Also, the quality may improve at shorter pulse widths (e.g., 50-100 microseconds) which may lead to a high-speed process. The longer pulses also provide high quality cuts, but increasing the duty cycle results in longer periods of time to complete the processing.

In yet another example, sapphire substrates with a thickness between about 0.4 mm and 0.7 mm were processed using the following process and laser parameters: a Ytterbium (Yb) single mode laser; 1070 nm wavelength; 14 µm fiber core diameter; 60 mm collimating distance; 123 mm focal length; 28. 7 µm spot size; argon or nitrogen assist gas at 17.23671 bar (250 psi); and 1.5 mm nozzle orifice. The following Table II shows the results of processing using the above parameters with different peak power, frequency, duty cycle, pulse width and cut speed.

**Table II**

| # | Material | Peak Power (W) | Frequency (Hz) | Duty Cycle (%) | Pulse Width (ms) | Cut Speed (cm/min) [Inch/min] | Comments |
|---|---|---|---|---|---|---|---|
| 1 | 0.4mm polished | 400 | 160 | 2,75 | 0,171 | 30.48 [12] | Very fine powdery dross. The dross rubs off easily just by wiping it. Some chipping and cracks. Less than <30 microns at random places. |
| 2 | 0.7mm unpolished | 900 | 400 | 3,5 | 0,0875 | 40.64-50.8 [16-20] | Very fine powdery dross. The dross rubs off easily just by wiping it. No cracking but some chipping. Less than <40 microns at random places. |
| 3 | 0.7mm unpolished | 750 | 300 | 3,5 | 0,116 | 30.48 [12] | Very fine powdery dross. The dross rubs off easily just by wiping it. No cracking but some chipping. Less than <40 microns at random places. Optics used is 200Focal/120mm collimator. |

Based on the foregoing, a QCW SM fiber laser with a wavelength in a range of 1060-1070 nm can be successfully used for cutting a sapphire substrate with minimal cracks and chipping. In the above example, the 0. 7 mm thick substrate has better cut quality. The 0.4 mm thick substrate exhibits chips along the edge of the cuts; however, the chips are generally less than 40 microns, which is considered to be a high quality cut as known to one of ordinary skill. The laser processing method disclosed herein also appears to be sensitive to high frequencies with significant chipping occurring at higher frequencies. The quality of the cuts also depends on the duration of duty cycle with a lower the duty cycle improving the cut quality. Peak power above 1600 W with a duty cycle of up to 10% may not provide any visible advantages, but a duty cycle lower than 1 % may deteriorate the quality of cuts. A gas pressure range between 13.78937 bar to 20.68406 bar (200 and 300 psi) also improved the efficiency of the process in these examples. The beam spot size is generally between about 14 and 30 microns, and using a spot size lower than 14 micron generally does not substantially affect the quality and efficiency of the process.

In a further example, sapphire substrates with a thickness of 2. 7 mm were successfully cut using a multimode QCW fiber laser with a 50 micron fiber with the following parameters: 15 kW peak power; 450 W average power; 0.6 ms pulse width; 100 micron spot size; 50Hz repetition rate; 3 % duty cycle; 25.40 cm/min (10 ipm) speed; argon gas at 6.89469 bar (100 psi); a 1.5 mm nozzle diameter; and a 1mm standoff. The use of argon or helium as the assist gas was found to improve cutting efficiency, possibly because of the trace Ti found in sapphire.

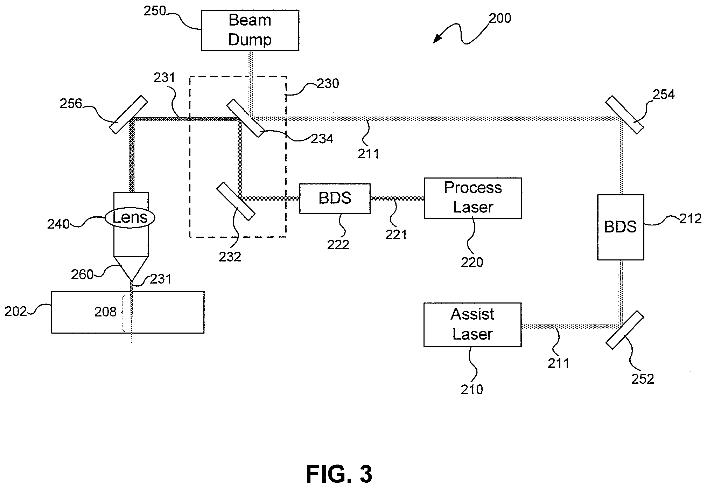

Referring to FIG. 3, a multiple-beam laser processing system 200 may also be used to process sapphire. Multiple-beam laser processing may be performed on a sapphire substrate or workpiece 202 using both an assist laser beam 211 and a process laser beam 221 with different characteristics (e.g., wavelengths and/or pulse durations). The assist laser beam 211 is directed at a target location 208 on or within the workpiece 202 to modify a property of the sapphire (e.g., induce damage or increase temperature) such that absorption centers are formed in the sapphire. The process laser beam 221 is directed at the target location 208 and is coupled into the absorption centers formed in the sapphire to complete processing of the sapphire. The assist laser beam 211 and the process laser beam 221 individually are not capable of completely processing the sapphire workpiece but together (either simultaneously or sequentially) provide a synergy that enables processing.

The illustrated embodiment of the multiple-beam laser processing system 200 includes an assist laser 210 for generating the assist laser beam 211 (e.g., a green laser of about 532 nm) and a process laser 220 for generating the process laser beam 221 (e.g., a QCW SM fiber laser of about 1060 to 1070 nm). The assist and process lasers 210, 220 are optically coupled to respective beam delivery systems 212, 222 for modifying the assist and process laser beams 211, 221, respectively, before combining the beams. The multiple-beam laser processing system 200 further includes a beam combiner 230, a focus lens 240, a laser processing head 260, and one or more reflectors or mirrors 252, 254, 256 for directing the assist and process laser beams 211, 221 as a combined laser beam 231 to the same target location 208 on or within a workpiece 202.

Although the illustrated embodiment shows the assist and process laser beams 211, 221 being combined simultaneously, the beams 211, 221 may also be combined such that the beams are directed to the same target location 208 at different times. Directing the laser beams 211, 221 simultaneously may include any amount of overlap between the bursts or pulses of the laser beams 211, 221 and does not necessarily require the laser beams to have the same burst or pulse duration. The assist laser beam 211 may start before or during the process laser beam 221. The laser beams 211, 221 may also be directed to the workpiece 202 at different times, for example, with the assist laser beam 211 before the process laser beam 221.

In the illustrated embodiment, the assist laser 210 may be a rare-earth-doped fiber laser such as a GLP Series pulsed green fiber laser available from IPG Photonics Corporation. In other embodiments, the assist laser 210 may include diode pumped solid state (DPSS) lasers, excimer lasers, gas lasers, and other types of lasers known to those skilled in the art. The process laser 220 may also be a rare-earth-doped fiber laser such as a QCW Series single-mode ytterbium fiber laser available from IPG Photonics Corporation.

The assist laser beam delivery system 212 may include a variable telescope to provide beam expansion and divergence control of the assist laser beam 211. In particular, the divergence of the assist laser beam 211 may be controlled to have an optimized numerical aperture (NA) to create substantially the same focal plane as the process laser beam 221 after the laser beams 211, 221 are combined. The process laser beam delivery system 222 may include a collimator such as, for example, a collimating lens with a focal length of 100 mm. Alternatively or additionally, the beam delivery systems 212, 222 may also include other optics for modifying and/or directing the laser light to the desired location. Such optics may include, without limitation, beam expanders, beam collimators, beam shaping lenses, reflectors, masks, beamsplitters and scanners (e.g., a galvanometer).

In the illustrated embodiment, the beam combiner 230 includes reflectors or mirrors 232, 234 for selectively reflecting the wavelengths of the assist and process laser beams 211, 221, respectively, such that the beams 211, 221 are directed along the same optical axis. The first mirror 232 is coated to reflect the wavelength of the process laser beam 221, and the second mirror 234 is coated on one side to reflect the wavelength of the process laser beam 221 and uncoated on the other side to allow at least a portion of the assist laser beam 211 to pass through. Thus, the second mirror 234 combines both beams 211, 221. In an embodiment with a green assist laser beam 211 and an IR process laser beam 221, for example, the first mirror 232 may be IR coated and the second mirror 234 may be IR coated on one side and uncoated on the other side. The uncoated side of the second mirror 234 may still reflect a portion of the assist laser beam 211 to a beam dump 250. Other embodiments for the beam combiner 230 are also within the scope of the present disclosure.

The mirrors 252, 254, 256 may be coated to reflect the desired wavelengths of the laser beams 211, 221. In an embodiment with a green assist laser beam 211 and an IR process laser beam 221, for example, the mirrors 252, 254 reflecting the green laser beam may be 532 nm or green coated mirrors capable of reflecting the green assist laser beam 211 and the mirror 256 may be a dual IR-green coated mirror capable of reflecting both the green assist laser beam 211 and the IR process laser beam 221. In one embodiment, the transmission of the multiple-beam laser processing system 200 may be 40% for the assist laser beam 211 and 90% for the process laser beam 221.

Although the illustrated embodiment shows free space delivery using mirrors, other optical components may also be used to deliver and/or combine the lasers. For example, one or more fibers may be used to deliver the laser beams to the laser processing head 260. In this embodiment, the lasers may be combined by focusing the lasers to the same location 208 on or within the workpiece 202.

The focus lens 240 may be a singlet focusing lens such as, for example, a lens with an 88 mm focal length and coated for IR. The focus lens 240 may be capable of focusing the laser beams to a beam spot with a diameter or dimension in a range of about 30 to 40 µm. In other embodiments, the beam delivery systems and focus lens 24 may be capable of focusing the lasers 211, 221 to an even smaller beam spot, for example, as small as 15 µm or smaller.

In the illustrated embodiment, the laser processing head 260 includes a gas assist nozzle 262 to direct a pressurized gaseous medium to the workpiece 202 together with the laser beams to facilitate laser processing, for example, when using a thermal cutting process where the gas helps to expel molten material. The gaseous medium may include, for example, oxygen (O₂). In other embodiments, the gaseous medium may be an inert gas, such as nitrogen, argon or helium.

Although the illustrated embodiments show multiple lasers 210, 220 generating the assist laser beam 211 and the process laser beam 221, the multiple laser beam processing method may also be performed using the same laser source to produce both the assist laser beam 211 and the process laser beam 221. For example, an assist laser beam may be generated from a laser source with one set of parameters (e.g., a shorter wavelength and/or pulse duration) and a process laser beam may be generated from the same laser source with a different set of parameters (e.g., a longer wavelength and/or pulse duration). A single laser beam generated by a laser source may also be split and modified with different beam delivery systems to produce the assist laser beam and the process laser beam with distinct characteristics.

Accordingly, laser processing systems and methods, as described herein, are capable of efficiently processing sapphire using a QCW SM fiber laser in a wavelength range of about 1060 - 1070 nm with reduced cutting edge defects, reduced thermal damage, and increased speeds.

While the principles of the invention have been described herein, it is to be understood by those skilled in the art that this description is made only by way of example and not as a limitation as to the scope of the invention. Other embodiments are contemplated within the scope of the present invention in addition to the example embodiments shown and described herein. Modifications and substitutions by one of ordinary skill in the art are considered to be within the scope of the present invention, which is not to be limited except by the following claims.

## Claims

1. A method for laser processing a sapphire substrate (102), including emitting consecutive pulses of laser light, focusing the light pulses at the sapphire substrate (102), and laser treating the sapphire substrate (102),
**characterized in that** the method comprising:
using single mode (SM) light from a single mode (SM) fiber laser (110, 112);
operating the single mode (SM) fiber laser (110, 112) in a quasi-continuous wave ("QCW") mode so as to emit consecutive pulses of single mode (SM) laser light at a wavelength ranging between about 1060 nm and about 1070 nm, the pulses of single mode (SM) light each having a pulse width ranging between about 50 microseconds and about 600 microseconds, wherein the laser is operated with a duty cycle ranging between about 1% and about 10%;
and
the laser processing the sapphire substrate (102) with the pulses of laser light so as to penetrate through it.

2. The method of claim 1 further comprising supplying inert gas in a vicinity of the sapphire substrate (102).

3. The method of claim 2, wherein the inert gas is selected from the group consisting of argon and helium.

4. The method of claim 1, wherein laser processing the sapphire substrate (102) is selected from the group consisting of cutting, scribing, and drilling
and/or
wherein laser processing includes cutting with a speed between about 25.4 cm and 101.6 cm (10 and 40 inches) per minute, and wherein the sapphire substrate has a thickness between about 0.1 and about 1 mm.

5. The method of claim 1, wherein the laser (110, 112) is an ytterbium fiber laser.

6. The method of claim 1 further comprising focusing assist laser light at the sapphire substrate (102), wherein the assist laser light modifies a property of the sapphire (102) to form absorption centers, and wherein the pulses of laser light from the laser couple into the absorption centers to facilitate the laser processing.

7. The method of claim 6, wherein the assist laser light is generated by a green fiber laser configured to emit assist laser light at a wavelength of about 532 nm
and/or
wherein the assist laser light is directed at the sapphire substrate (102) simultaneously with the pulses of laser light from the laser.

8. The method of claim 6, wherein the assist laser light is generated by a green fiber laser configured to emit assist laser light at a wavelength of about 532 nm and wherein the green fiber laser is configured to emit the assist laser light with a pulse duration of 1 ns.

9. A laser processing system (100) for laser processing sapphire substrates (102), comprising
a focus lens (140) configured to focus the laser light on the sapphire substrate (102) so as to process the sapphire substrate (102);
a laser head configured to direct the focused laser light to the sapphire substrate (102) and including a nozzle (160) for delivering an inert gas to the sapphire substrate (102) with the laser light; and being **characterized in that** the laser processing system comprises a fiber laser (110, 112) configured to operate in a quasi continuous wave ("QCW") mode and wherein the fiber laser (110, 112) includes a single mode (SM) fiber laser to emit consecutive pulses of single mode (SM) laser light at a wavelength between about 1060 nm and about 1070 nm;
a controller (172) coupled to the fiber laser for periodically switching power to the fiber laser (110, 112) to pulse the fiber laser (110, 112) in the QCW mode with a duty cycle ranging between about 1% and about 10%;
wherein the fiber laser (110, 112) includes a single mode (SM) fiber laser and wherein the controller (172) is configured to periodically switch power to the SM fiber laser to emit pulses each having a pulse width which ranges between about 50 microseconds and about 600 microseconds; and
a gas delivery system (162) configured to deliver the inert gas into the laser head.

10. The laser processing system (100) of claim 9, wherein the fiber laser (110, 112) includes a single mode (SM) fiber laser
and/or
wherein the fiber laser (110, 112) includes an ytterbium fiber laser.

11. The laser processing system (100) of claim 9, wherein the inert gas is selected from the group consisting of argon and helium.

12. A multiple-beam laser processing system (200) for processing a sapphire substrate (202), the multiple-beam laser processing system (200) comprising:
an assist laser (210) for generating an assist laser beam (211) with a wavelength and a pulse duration such that the sapphire substrate (202) is sufficiently absorptive of the assist laser beam (211) to modify a property of the sapphire substrate (202); and being **characterized by**
a single mode (SM) quasi continuous wave (QCW) process fiber laser (220) for generating a process laser beam (221) with a wavelength between about 1060 nm and about 1070 nm, wherein the wavelength of the assist laser beam is less than the wavelength of the single mode (SM) process laser beam; and
a beam combiner for directing the assist laser beam (211) and the single mode (SM) process laser beam (221) at a target location (208) on the workpiece (202) such that the assist laser beam (211) modifies a property of the sapphire substrate (202) at the target location (208) forming absorption centers and such that the single mode (SM) process laser beam (221) is coupled into the absorption centers formed in the sapphire substrate (202) at the target location (208) to complete processing of the sapphire substrate (202) at the target location (208).

13. The multiple-beam laser processing system (200) of claim 12 further including a focus lens for focusing the assist laser beam (211) and the process laser beam (221) at the target location (208)
and/or
wherein the assist laser (210) is a green fiber laser for generating a green assist laser beam (211) with a wavelength of about 532 nm.

14. The multiple-beam laser processing system (200) of claim 12, wherein the QCW fiber laser is a QCW single-mode ytterbium fiber laser
and/or
wherein the multiple-beam laser processing system (200) further comprising an assist laser beam (211) delivery system for controlling divergence of the assist laser beam (211) such that the assist laser beam (211) and the process laser beam (221) have the same focal plane.

## Patentansprüche

1. Verfahren für die Laserverarbeitung eines Saphirsubstrats (102), wobei das Verfahren das Emittieren aufeinanderfolgender Laserlichtimpulse, das Fokussieren der Lichtimpulse bei dem Saphirsubstrat (102) und das Laserbehandeln des Saphirsubstrats (102) enthält,
**dadurch gekennzeichnet, dass** das Verfahren umfasst:
Verwenden von Einmodenlicht (SM-Licht) von einem Einmodenfaserlaser (SM-Faserlaser) (110, 112);
Betreiben des Einmodenfaserlasers (SM-Faserlasers) (110, 112) in einer Quasi-Dauerstrich-Betriebsart ("QCW"-Betriebsart), um aufeinanderfolgende Einmoden-Laserlichtimpulse (SM-Laserlichtimpulse) mit einer Wellenlänge in einem Bereich zwischen etwa 1060 nm und etwa 1070 nm zu emittieren, wobei die Einmoden-Lichtimpulse (SM-Lichtimpulse) jeweils eine Impulsbreite in einem Bereich zwischen etwa
50 Mikrosekunden und etwa 600 Mikrosekunden aufweisen, wobei der Laser mit einem Tastgrad im Bereich zwischen etwa 1 % und etwa 10 % betrieben wird;
und
das Laserverarbeiten des Saphirsubstrats (102) mit den Laserlichtimpulsen, um sie zu durchdringen.

2. Verfahren nach Anspruch 1, das ferner das Zuführen von Inertgas in eine Nähe des Saphirsubstrats (102) umfasst.

3. Verfahren nach Anspruch 2, wobei das Inertgas aus der Gruppe gewählt wird, die aus Argon und Helium besteht.

4. Verfahren nach Anspruch 1, wobei das Laserverarbeiten des Saphirsubstrats (102) aus der Gruppe gewählt wird, die aus Schneiden, Ritzen und Bohren besteht,
und/oder
wobei das Laserverarbeiten das Schneiden mit einer Geschwindigkeit zwischen etwa 25,4 cm und 101,6 cm (10 und 40 Zoll) pro Minute enthält und wobei das Saphirsubstrat eine Dicke zwischen etwa 0,1 und etwa 1 mm aufweist.

5. Verfahren nach Anspruch 1, wobei der Laser (110, 112) ein Ytterbiumfaserlaser ist.

6. Verfahren nach Anspruch 1, das ferner das Fokussieren von Hilfslaserlicht auf das Saphirsubstrat (102) umfasst, wobei das Hilfslaserlicht eine Eigenschaft des Saphirs (102) ändert, um Absorptionszentren zu bilden, und wobei die Laserlichtimpulse von dem Laser in die Absorptionszentren koppeln, um die Laserverarbeitung zu erleichtern.

7. Verfahren nach Anspruch 6, wobei das Hilfslaserlicht durch einen grünen Faserlaser erzeugt wird, der dafür konfiguriert ist, Hilfslaserlicht mit einer Wellenlänge von etwa 532 nm zu emittieren,
und/oder
wobei das Hilfslaserlicht gleichzeitig mit den Laserlichtimpulsen von dem Laser auf das Saphirsubstrat (102) gerichtet wird.

8. Verfahren nach Anspruch 6, wobei das Hilfslaserlicht durch einen grünen Faserlaser erzeugt wird, der dafür konfiguriert ist, Hilfslaserlicht mit einer Wellenlänge von etwa 532 nm zu emittieren, und wobei der grüne Faserlaser dafür konfiguriert ist, das Hilfslaserlicht mit einer Impulsdauer von 1 ns zu emittieren.

9. Laserverarbeitungssystem (100) für die Laserverarbeitung von Saphirsubstraten (102), wobei das Laserverarbeitungssystem umfasst:
einen Faserlaser (110, 112), der dafür konfiguriert ist, in einer Quasi-Dauerstrich-Betriebsart ("QCW"-Betriebsart) zu arbeiten, und wobei der Faserlaser (110, 112) einen Einmodenfaserlaser (SM-Faserlaser) zum Emittieren aufeinanderfolgender Einmoden-Laserlichtimpulse (SM-Laserlichtimpulse) mit einer Wellenlänge zwischen etwa 1060 nm und etwa 1070 nm enthält;
eine Steuereinheit (172), die mit dem Faserlaser gekoppelt ist, um die Leistung für den Faserlaser (110, 112) periodisch zu schalten, um den Faserlaser (110, 112) in der QCW-Betriebsart mit einem Tastgrad in einem Bereich zwischen 1 % und etwa 10 % zu pulsen;
wobei der Faserlaser (110, 112) einen Einmodenfaserlaser (SM-Faserlaser) enthält und wobei die Steuereinheit (172) dafür konfiguriert ist, die Leistung für den SM-Faserlaser zum Emittieren von Impulsen jeweils mit einer Pulsbreite in dem Bereich zwischen etwa 50 Mikrosekunden und etwa
600 Mikrosekunden periodisch zu schalten; und
eine Fokussierungslinse (140), die dafür konfiguriert ist, das Laserlicht in der Weise auf das Saphirsubstrat (102) zu fokussieren, dass das Saphirsubstrat (102) verarbeitet wird; einen Laserkopf, der dafür konfiguriert ist, das fokussierte Laserlicht auf das Saphirsubstrat (102) zu richten, und der eine Düse (160) enthält, um dem Saphirsubstrat (102) mit dem Laserlicht ein Inertgas zuzuführen; und **dadurch gekennzeichnet, dass** das Laserverarbeitungssystem umfasst: ein Gaszufuhrsystem (162), das dafür konfiguriert ist, das Inertgas in den Laserkopf zuzuführen.

10. Laserverarbeitungssystem (100) nach Anspruch 9, wobei der Faserlaser (110, 112) einen Einmodenfaserlaser (SM-Faserlaser) enthält,
und/oder
wobei der Faserlaser (110, 112) einen Ytterbiumfaserlaser enthält.

11. Laserverarbeitungssystem (100) nach Anspruch 9, wobei das Inertgas aus der Gruppe gewählt ist, die aus Argon und Helium besteht.

12. Mehrstrahl-Laserverarbeitungssystem (200) zum Verarbeiten eines Saphirsubstrats (202), wobei das Mehrstrahl-Laserverarbeitungssystem (200) umfasst:
einen Hilfslaser (210) zum Erzeugen eines Hilfslaserstrahls (211) mit einer Wellenlänge und mit einer Pulsdauer derart, dass das Saphirsubstrat (202) für den Hilfslaserstrahl (211) ausreichend absorbierend ist, um eine Eigenschaft des Saphirsubstrats (202) zu ändern; und **gekennzeichnet durch** einen Einmoden-Quasi-Dauerstrich-Prozessfaserlaser (SM-QCW-Prozessfaserlaser) (220) zum Erzeugen eines Prozesslaserstrahls (221) mit einer Wellenlänge zwischen etwa 1060 nm und etwa 1070 nm, wobei die Wellenlänge des Hilfslaserstrahls kleiner als die Wellenlänge des Einmoden-Prozesslaserstrahls (SM-Prozesslaserstrahls) ist; und
einen Strahlvereiniger, um den Hilfslaserstrahl (211) und den Einmoden-Prozesslaserstrahl (SM-Prozesslaserstrahl) (221) auf einen Zielort (208) an dem Werkstück (202) zu richten, so dass der Hilfslaserstrahl (211) eine Eigenschaft des Saphirsubstrats (202) an dem Zielort (208) ändert und Absorptionszentren bildet, und so dass der Einmoden-Prozesslaserstrahl (SM-Prozesslaserstrahl) (221) in die an dem Zielort (208) in dem Saphirsubstrat (202) gebildeten Absorptionszentren gekoppelt wird, um die Verarbeitung des Saphirsubstrats (202) an dem Zielort (208) abzuschließen.

13. Mehrstrahl-Laserverarbeitungssystem (200) nach Anspruch 12, das ferner eine Fokussierungslinse zum Fokussieren des Hilfslaserstrahls (211) und des Prozesslaserstrahls (221) bei dem Zielort (208) enthält,
und/oder
wobei der Hilfslaser (210) ein grüner Faserlaser zum Erzeugen eines grünen Hilfslaserstrahls (211) mit einer Wellenlänge von etwa 532 nm ist.

14. Mehrstrahl-Laserverarbeitungssystem (200) nach Anspruch 12, wobei der QCW-Faserlaser ein QCW-Einmoden-Ytterbiumfaserlaser ist,
und/oder
wobei das Mehrstrahl-Laserverarbeitungssystem (200) ferner ein Zuführungssystem des Hilfslaserstrahls (211), um die Divergenz des Hilfslaserstrahls (211) in der Weise zu steuern, dass der Hilfslaserstrahl (211) und der Prozesslaserstrahl (221) dieselbe Brennebene aufweisen, umfasst.

## Revendications

1. Un procédé pour le traitement laser d'un substrat de saphir (102), comprenant l'émission d'impulsions consécutives d'une lumière laser, focalisant les impulsions lumineuses sur le substrat de saphir (102) et un laser traitant le substrat de saphir (102),
**caractérisé en ce que** le procédé comprend :
l'utilisation d'une lumière en mode unique (SM) provenant d'un laser à fibre (110, 112) ; en mode unique (SM),
l'exploitation du laser à fibre (110, 112) en mode unique (SM) dans un mode d'onde quasi-continue (« QCW ») de manière à émettre des impulsions consécutives de lumière laser en mode unique (SM) à une longueur d'onde comprise entre environ 1060 nm et environ 1070 nm, les impulsions de lumière en mode unique (SM) ayant chacune une largeur d'impulsion comprise entre environ 50 microsecondes et environ 600 microsecondes, le laser étant utilisé avec un cycle opératoire compris entre environ 1% et environ 10%,
et
le laser traitant le substrat de saphir (102) avec les impulsions de lumière laser de manière à pénétrer à travers celui-ci.

2. La méthode de la revendication n°1, comprenant en plus la fourniture d'un gaz inerte à proximité du substrat de saphir (102) .

3. La méthode de la revendication n°2, le gaz inerte étant sélectionné dans le groupe composé de l'argon et de l'hélium.

4. La méthode de la revendication n°1, le laser traitant le substrat de saphir (102) étant sélectionné dans le groupe comprenant la découpe, la gravure et le perçage
et/ou
le traitement laser comprenant la découpe à une vitesse comprise entre environ 25,4 cm et 101,6 cm (10 et 40 pouces) par minute et le substrat de saphir ayant une épaisseur comprise entre environ 0,1 et environ 1 mm.

5. La méthode de la revendication n°1, le laser (110, 112) étant un laser à fibre dopée à l'ytterbium.

6. La méthode de la revendication n°1, comprenant en plus la focalisation d'une lumière laser d'assistance sur le substrat de saphir (102), la lumière laser d'assistance modifiant une propriété du saphir (102) pour former des centres d'absorption et les impulsions de lumière laser provenant du laser entrant dans les centres d'absorption pour faciliter le traitement laser.

7. La méthode de la revendication n°6, la lumière laser d'assistance étant générée par un laser à fibre vert configuré pour émettre la lumière laser d'assistance à une longueur d'onde d'environ 532 nm
et/ou
la lumière laser d'assistance étant dirigée sur le substrat de saphir (102) simultanément avec les impulsions de lumière laser provenant du laser.

8. La méthode de la revendication n°6, la lumière laser d'assistance étant générée par un laser à fibre vert configuré pour émettre la lumière laser d'assistance à une longueur d'onde d'environ 532 nm et le laser à fibre vert étant configuré pour émettre la lumière laser d'assistance avec une durée d'impulsion de 1 ns.

9. Un système de traitement laser (100) pour le traitement laser de substrats de saphir (102), comprenant
un laser à fibre (110, 112) configuré pour opérer dans un mode d'onde quasi-continue (« QCW ») et le laser à fibre (110, 112) comprenant un laser à fibre en mode unique (SM) pour émettre des impulsions consécutives de lumière laser en mode unique (SM) à une longueur d'onde comprise entre environ 1060 nm et environ 1070 nm,
un contrôleur (172) couplé avec le laser à fibre pour une commutation ponctuelle de puissance sur le laser à fibre (110, 112) pour puiser le laser à fibre (110, 112) en mode QCW avec un cycle opératoire compris entre environ 1% et environ 10%,
le laser à fibre (110, 112) comprenant un laser à fibre en mode unique (SM) et le contrôleur (172) étant configuré pour une commutation ponctuelle de puissance sur le laser à fibre SM pour émettre des impulsions, chaque impulsion ayant une largeur d'impulsion comprise entre environ 50 microsecondes et environ 600 microsecondes et
une lentille de focalisation (140) configurée pour focaliser la lumière laser sur le substrat de saphir (102) de manière à traiter le substrat de saphir (102) ;
une tête laser configurée pour diriger la lumière laser focalisée sur le substrat de saphir (102) et comprenant un embout (160) pour fournir un gaz inerte au substrat de saphir (102) avec la lumière laser, et **caractérisé en ce que** le système de traitement laser comprend
un système de fourniture de gaz (162) configuré pour fournir le gaz inerte dans la tête laser.

10. Le système de traitement laser (100) de la revendication n°9, le laser à fibre (110, 112) comprenant un laser à fibre en mode unique (SM)
et/ou
le laser à fibre (110, 112) comprenant un laser à fibre dopée à l'ytterbium.

11. Le système de traitement laser (100) de la revendication n°9, le gaz inerte étant sélectionné dans le groupe composé de l'argon et de l'hélium.

12. Un système de traitement laser à faisceau multiple (200) pour le traitement d'un substrat de saphir (202), le système de traitement laser à faisceau multiple (200) comprenant :
un laser d'assistance (210) pour générer un faisceau laser d'assistance (211) avec une longueur d'onde et une durée d'impulsion de façon à ce que le substrat de saphir (202) absorbe suffisamment le faisceau laser d'assistance (211) pour modifier une propriété du substrat de saphir (202), et **caractérisé en ce que**
un laser à fibre de traitement (220) à onde quasi-continue (QCW) en mode unique (SM) pour générer un faisceau laser de traitement (221) avec une longueur d'onde comprise entre environ 1060 nm et environ 1070 nm, la longueur d'onde du faisceau laser d'assistance étant inférieure à la longueur d'onde du faisceau laser de traitement en mode unique (SM) et
un combinateur de faisceaux pour diriger le faisceau laser d'assistance (211) et le faisceau laser de traitement (221) en mode unique (SM) sur une position cible (208) de la pièce à usiner (202) de façon à ce que le faisceau laser d'assistance (211) modifie une propriété du substrat de saphir (202) sur la position cible (208) formant des centres d'absorption et à ce que le faisceau laser de traitement (221) en mode unique (SM) soit couplé dans les centres d'absorption formés dans le substrat de saphir (202) sur la position cible (208) afin de finaliser le traitement du substrat de saphir (202) sur la position cible (208).

13. Le système de traitement laser à faisceau multiple (200) de la revendication n°12, comprenant en plus une lentille de focalisation pour focaliser le faisceau laser d'assistance (211) et le faisceau laser de traitement (221) sur la position cible (208)
et/ou
le laser d'assistance (210) étant un laser à fibre vert pour générer un faisceau laser d'assistance (211) vert avec une longueur d'onde d'environ 532 nm.

14. Le système de traitement laser à faisceau multiple (200) de la revendication n°12, le laser à fibre QCW étant un laser à fibre dopée à l'ytterbium en mode unique QCW
et/ou
le système de traitement laser à faisceau multiple (200) comprenant en plus un système de fourniture du faisceau laser d'assistance (211) pour contrôler la divergence du faisceau laser d'assistance (211) de façon à ce que le faisceau laser d'assistance (211) et le faisceau laser de traitement (221) aient le même plan focal.
